# EUROPEAN PATENT SPECIFICATION

(11) **EP 2 692 703 B1**
(45) Date of publication and mention of the grant of the patent: **25.04.2018**
(21) Application number: 12763083.8
(22) Date of filing: 22.03.2012
(51) Int. Cl.: C23C 28/00, C23C 4/11, C23C 4/02, C22C 5/04, C04B 41/00, C04B 41/90, C03B 5/167, C03B 5/43, C04B 35/101, C04B 35/482, C04B 35/486, C04B 41/52

(54) **MOLTEN GLASS HOLDING REFRACTORY, GLASS MANUFACTURING APPARATUS USING MOLTEN GLASS HOLDING REFRACTORY AND METHOD FOR MANUFACTURING GLASS USING GLASS MANUFACTURING APPARATUS**
FEUERFESTE HALTERUNG FÜR GESCHMOLZENES GLAS, GLASHERSTELLUNGSVORRICHTUNG MIT DER FEUERFESTEN HALTERUNG FÜR GESCHMOLZENES GLAS UND GLASHERSTELLUNGSVERFAHREN UNTER VERWENDUNG DER GLASHERSTELLUNGSVORRICHTUNG
CORPS RÉFRACTAIRE POUR VERRE FONDU, APPAREIL DE FABRICATION DU VERRE UTILISANT LEDIT CORPS RÉFRACTAIRE POUR VERRE FONDU, ET PROCÉDÉ DE FABRICATION DU VERRE À L'AIDE DUDIT APPAREIL

(30) Priority: 28.03.2011 JP 2011070738
(43) Date of publication of application: 05.02.2014
(73) Proprietor: Asahi Glass Company, Limited, Tokyo 100-8405 (JP)
(72) Inventor: HAMASHIMA, Kazuo, Tokyo 100-8405 (JP); ISHIKAWA, Yasunari, Tokyo 100-8405 (JP)
(74) Representative: Müller-Boré & Partner Patentanwälte PartG mbB
(86) International application number: PCT/JP2012/057337
(87) International publication number: WO 2012/133107

(56) References cited:
- EP-A1- 0 559 330
- WO-A2-2008/027480
- JP-A- 5 339 082
- JP-A- 2000 095 528
- JP-A- 2001 505 620
- JP-A- 2005 008 454
- JP-A- 2006 077 318
- JP-A- 2006 077 318
- JP-A- 2010 202 444

## Description

The present invention relates to a refractory for holding a molten glass used in applications of contacting molten glasses such as a glass melting tank, a refining tank and a molten glass carrier pipe in an apparatus for manufacturing a glass.

The present invention further relates to an apparatus for manufacturing a glass, including the refractory for holding a molten glass.

Furthermore, the present invention relates to a method for manufacturing a glass, using the apparatus for manufacturing a glass.

In an apparatus for manufacturing a glass that manufactures a glass using a molten glass, a refractory is used in parts contacting a molten glass, such as a glass melting tank, a refining tank and a molten glass carrier pipe. It is known that the refractory used in such parts can improve heat resistance and corrosion resistance to a molten glass by coating the parts contacting the molten glass with platinum or a platinum alloy.

Patent Document 1 discloses a ceramic product in which a noble metal coating film or a noble metal alloy coating film is deposited on a refractory ceramic (that is, refractory) substrate, and the coating film has a thickness of from 50 to 350 µm. Patent Document 1 discloses that the coating film preferably contains platinum or a platinum alloy. The ceramic product can be preferably used as a refractory of parts contacting a molten glass in an apparatus for manufacturing a glass because the ceramic product can be preferably used in a high temperature and corrosive atmosphere. JP 2006-077318 A describes a method for modifying a surface of an apparatus for producing glass.

Patent Document 1: JP-A-5-339082

As described above, it has been considered in an apparatus for manufacturing a glass that a refractory used in parts contacting a molten glass can improve heat resistance and corrosion resistance to a molten glass by coating the parts contacting a molten glass with platinum or a platinum alloy.

However, as a result of assiduous studies of the inventors of the present application, the inventors have found that in the case that a refractory used in parts contacting a molten glass has been coated with platinum or a platinum alloy in an apparatus for manufacturing a glass, there is a concern that platinum volatilized from the coating is mixed into a molten glass, and that this causes defects in a glass product manufactured using the molten glass.

That is, a liquid level of a molten glass passing through an apparatus for manufacturing a glass is not always constant, and the liquid level may go up and down. In the case that the liquid level of the molten glass has gone down, a part of the coating of a refractory exposes in an atmosphere. The atmosphere of the part passing through the molten glass has high temperature exceeding 1,200°C. Therefore, in the case where an oxygen concentration in the atmosphere is high, a slight amount of platinum volatilizes as an oxide from the coating exposed to the atmosphere. The oxide is not stable, and is reduced by slight change of environment and is recrystallized as metal fine particles (platinum particles). The metal fine particles (platinum particles) recrystallized in this way are incorporated in a molten glass. Metal fine particles (platinum particles) that could not dissolve remain as defects on quality in a glass product manufactured using the molten glass.

Furthermore, in the course of using an apparatus for manufacturing a glass for a long period of time, there is a concern that the thickness of a coating is decreased by volatilization of platinum, and, in some cases, parts having an exposed refractory may be generated. In the case that those phenomena have occurred, erosion of a refractory by a molten glass becomes a problem, and additionally, may lead to peeling of a coating.

To solve the above problems in the prior art, the present invention has an object to provide a refractory for holding a molten glass capable of suppressing volatilization platinum from a coating, an apparatus for manufacturing a glass including the refractory for holding a molten glass, and a method for manufacturing a glass using the apparatus for manufacturing a glass.

In order to achieve the above-mentioned object, the present invention provides a refractory for holding a molten glass in which a surface thereof contacting a molten glass is coated with platinum or a platinum alloy containing from 5 to 20% of rhodium or iridium, and the platinum coating or the platinum alloy coating is further coated with a ceramic material, wherein the refractory contains at least one of an aluminum oxide and a zirconium oxide in a total content of from 50 to 98% by mass, and a remainder thereof contains a silicon oxide, the platinum coating or the platinum alloy coating has a thickness of from 0.05 to 0.5 mm, the ceramic material contains from 80 to 95% by mass of a zirconium oxide, and a remainder thereof contains at least one selected from a yttrium oxide, an erbium oxide and a cerium oxide, the ceramic material coating has a thickness of 0.1 mm or more, and the ceramic material coating has a porosity of from 5 to 20%.

According to the present invention, volatilization of platinum from a coating of a refractory used in parts contacting a molten glass of an apparatus for manufacturing a glass can be suppressed. This enables to manufacture a glass product having excellent quality in which defects by platinum volatilization are suppressed.

Suppression of volatilization of platinum from a coating of a refractory reduces possibilities of wear damage and peeling of a coating during using an apparatus for manufacturing a glass for a long period of time. This enables to use an apparatus for manufacturing a glass in a stable manner over a long period of time.

Moreover, the present invention has a structure that a platinum coating or a platinum alloy coating having a thermal expansion coefficient larger than that of a refractory and a ceramic material is sandwiched between the refractory and the ceramic materials, having thermal expansion coefficients close to each other. Therefore, the structure can prevent the coating from peeling due to temperature change in an apparatus for manufacturing a glass.

In the present invention, a temperature of the refractory for holding a molten glass of the present invention can be controlled by connecting the platinum coating or the platinum alloy coating to an electrode and conducting electrical heating.

[Fig. 1] Fig. 1 is a graph showing mass decrease over time when a refractory for holding a molten glass was maintained in high temperature environment (1,600°C, in air) in the examples.
[Fig. 2] Fig. 2 is a cross-section photograph of a coating of a ceramic material of Sample D in the examples.
[Fig. 3] Fig. 3 is a cross-section photograph of a coating of a ceramic material of Sample C in the examples.

The refractory for holding a molten glass of the present invention is described below.

The refractory for holding a molten glass of the present invention can be widely applied to refractories in applications of holding a molten glass. The term "holding a molten glass" means to hold a molten glass without flowing out the molten glass outside, and the term "holding a molten glass" is corresponds to, for example, applications of housing molten glasses such as a glass melting tank and a refining tank, and applications of carrying molten glasses such as a molten glass carrier pipe.

In the case of using a refractory in applications of holding a molten glass, a portion necessary to be coated with platinum or a platinum alloy for the purpose of improving heat resistance and corrosion resistance to a molten glass is a surface contacting a molten glass during use. In the case of using a refractory in a glass melting tank, a refining tank, a molten glass carrier pipe, and the like, an inner surface of a glass melting tank, a refining tank, a molten glass carrier pipe, and the like corresponds to the surface contacting a molten glass.

The refractory for holding a molten glass of the present invention is that in a refractory constituting a substrate, a surface contacting a molten glass during use is coated with platinum or a platinum alloy, and the platinum or the platinum alloy is further coated with a ceramic material.

In the refractory for holding a molten glass of the present invention, the characteristics required in the refractory constituting a substrate are sufficient heat resistance, oxidation resistance and mechanical resistance at a glass melting temperature, and in the case that the platinum coating or the platinum alloy coating is subjected to electrical heating, sufficient insulating property is further required.

To satisfy those characteristics, the refractory for holding a molten glass of the present invention uses a refractory containing at least one of an aluminum oxide and a zirconium oxide in the total amount of from 50 to 98% by mass, and the remainder thereof containing a silicon oxide, as the refractory constituting a substrate.

Next, preferred range of the content of each component of a refractory constituting a substrate and the reason for this are described below.

An aluminum oxide and a zirconium oxide are main components constituting the refractory. In the case where the total content of those oxides is less than 50% by mass, heat resistance, oxidation resistance, mechanical strength and the like at a glass melting temperature are insufficient. On the other hand, in the case where the total content of those oxides exceeds 98%, the content of a glass matrix component is insufficient, and there is a concern that cracks occur in the refractory.

The refractory constituting a substrate may contain only either of an aluminum oxide and a zirconium oxide, and may contain both of them. In the case of containing only either of those oxides, the oxide can be appropriately selected depending on a temperature region of a molten glass to which the refractory for holding a molten glass of the present invention contacts during use. Specifically, for example, in the case of using in a glass melting tank, a temperature of a molten glass contacting during use is high as from 1,400 to 1,800°C, and preferably from 1,500 to 1,800°C. Therefore, the refractory constituting a substrate preferably contains a zirconium oxide having further excellent corrosion resistance to a molten glass. In this case, the refractory constituting a substrate uses a refractory containing from 50 to 98% by mass of a zirconium oxide, and the remainder thereof containing a silicon oxide. The content of a zirconium oxide is preferably from 60 to 97% by mass, and more preferably from 65 to 95% by mass.

On the other hand, in the case of using in a molten glass carrier pipe, a temperature of a molten glass contacting during use is low as from 1,200 to 1,500°C, as compared with a glass melting tank. Therefore, the refractory constituting a substrate preferably contains an aluminum oxide having further excellent processability. Furthermore, in the case of using in a molten glass carrier pipe, there are many cases that a temperature of the molten glass carrier pipe is controlled by connecting the platinum coating or the platinum alloy coating of the refractory to an electrode and conducting electrical heating. In this case, the refractory constituting a substrate preferably contains an aluminum oxide having further excellent insulating property. In this case, the refractory constituting a substrate uses a refractory containing from 50 to 98% by mass of an aluminum oxide, and the remainder thereof containing a silicon oxide. The content of an aluminum oxide is preferably from 60 to 95% by mass, and more preferably from 75 to 92% by mass.

Also, in the case of using as a refining tank or a melting tank operated at relatively low temperature, a temperature of the molten glass contacting during use is from 1,300 to 1,600°C. Therefore, from the standpoints of cost and corrosion resistance to a molten glass, a refractory containing both an aluminum oxide and a zirconium oxide can be used as the refractory constituting a substrate. In this case, as the refractory constituting a substrate, a refractory containing an aluminum oxide and a zirconium oxide in the total content of from 65 to 95% by mass, and the remainder thereof containing a silicon oxide can be used. The total content of an aluminum oxide and a zirconium oxide is more preferably from 70 to 90% by mass.

A silicon oxide is a component constituting a glass matrix of a refractory, and is a component forming a main constituent phase compound together with an aluminum oxide and a zirconium oxide. The content of a silicon oxide is preferably from 3 to 50% by mass, and more preferably from 5 to 45% by mass.

The refractory having the above composition may contain unavoidable impurities as the remainder. The unavoidable impurities are unavoidably contained from raw materials used in producing the refractory. Specific examples of the unavoidable impurities include a magnesium oxide, an iron oxide and a titanium oxide.

The refractory constituting a substrate preferably has a porosity of 30% or less. In the case where the porosity of the refractory constituting a substrate is too high, air permeability of the refractory is increased. As a result, the platinum coating or the platinum alloy coating is oxidized by the contact of gas components from a back side of the refractory, and there is a concern that the action of improving heat resistance and corrosion resistance to a molten glass by the coating is decreased. Furthermore, the platinum coating or the platinum alloy coating volatilizes from the back side of the refractory, whereby there is a concern that the action for suppressing volatilization of the coating is decreased due to volatilization of the platinum coating or the platinum alloy coating from the back side of the refractory. Incidentally, the term "back side of the refractory" used herein means a back side to a side having the platinum or the platinum alloy formed thereon of the refractory.

Incidentally, the porosity of a refractory can be obtained by, for example, subjecting a cross-section photograph of the refractory taken by a metallographic microscope to image processing.

As described above, the surface contacting the molten glass, of the refractory constituting a substrate is coated with platinum or a platinum alloy. A platinum alloy containing rhodium or iridium in an amount of from 5 to 20% can be used as the platinum alloy.

In the refractory for holding a molten glass of the present invention, the thickness of the platinum coating or the platinum alloy coating is from 0.05 to 0.5 mm. In the case where the thickness of the coating is less than 0.05 mm, the effect of improving corrosion resistance to a molten glass, of the refractory constituting a substrate cannot sufficiently be exerted, and furthermore, wastage of the coating during using an apparatus for manufacturing a glass becomes a problem.

In the refractory for holding a molten glass of the present invention, thermal expansion and shrinkage of the platinum coating or the platinum alloy coating, due to temperature change during using an apparatus for manufacturing a glass, are suppressed by decreasing the thickness of the platinum coating or the platinum alloy coating, and sandwiching the platinum coating or the platinum alloy coating between a refractory and a ceramic material, having thermal expansion coefficients close to each other, thereby preventing the coating from peeling. In the case where the thickness of the platinum coating or the platinum alloy coating exceeds 0.5 mm, thermal expansion and shrinkage of the platinum coating or the platinum alloy coating, due to temperature change during using an apparatus for manufacturing a glass, cannot be suppressed, and there is a concern that the coating peels from the refractory.

In the refractory for holding a molten glass of the present invention, the thickness of the platinum coating or the platinum alloy coating is preferably from 0.1 to 0.4 mm, and more preferably from 0.15 to 0.35 mm.

In the refractory for holding a molten glass of the present invention, a method for forming the platinum coating or the platinum alloy coating on the side contacting a glass during using a refractory is not particularly limited. Formation of the coating by thermal spraying is preferred for the reasons that a coating having excellent adhesiveness to a refractory can be formed, a thick coating can be formed, and a coating can be formed on a large area. The thermal spraying method can employ flame spraying using wire raw materials, and air plasma spraying using powdery raw materials, but is not limited to those methods.

The ceramic material coating formed on the platinum coating or the platinum alloy coating is required to have excellent heat resistance and corrosion resistance to a molten glass. Furthermore, to prevent peeling of the coating from the refractory, the thermal coefficient of the ceramic material coating is required to be close to that of the refractory constituting a substrate.

Furthermore, for the reasons described hereinafter, the ceramic material coating is required to be a coating having a porosity of from 5 to 20%.

To satisfy those characteristics, in the refractory for holding a molten glass of the present invention, a ceramic material, which contains from 80 to 95% by mass of a zirconium oxide, and the remainder thereof contains at least one selected from a yttrium oxide, an erbium oxide and a cerium oxide, is used as the ceramic material constituting the coating.

In the refractory for holding a molten glass of the present invention, a zirconium oxide is a main component constituting the ceramic material coating.

In the case where the content of a zirconium oxide in the ceramic material constituting a coating is less than 80% by mass, corrosion resistance to a molten glass is decreased. On the other hand, in the case where the content of a zirconium oxide exceeds 95% by mass, there is a concern that large-scale crack by volume change due to phase transformation at high temperature occurs.

Furthermore, in the case that the coating has been formed by a ceramic material mainly comprising a zirconium oxide, the coating formed forms a laminated structure containing fine interlaminar cracks. As a result, there is a merit that fatal crack due to temperature change during using an apparatus for manufacturing a glass is difficult to be generated, as compared with the dense coating formed in the case of forming the coating by a ceramic material mainly comprising an aluminum oxide.

In the refractory for holding a molten glass of the present invention, a yttrium oxide, an erbium oxide and a cerium oxide are stabilizing agents for the ceramic material forming a coating. The ceramic material constituting a coating may contain only one of those, and may contain two kinds or more of those. Of those, the ceramic material preferably contains a yttrium oxide because a structure of the coating is easily controlled.

In the refractory for holding a molten glass of the present invention, the total content of a yttrium oxide, an erbium oxide and a cerium oxide as the stabilizing agents for the ceramic material is preferably from 5 to 20% by mass. In the case where the total content is less than 5% by mass, phase transformation occurs at high temperature, and large-scale cracks may be generated in the coating. On the other hand, in the case where the total content exceeds 20% by mass, corrosion resistance to a molten glass may be decreased. The total content of those oxides as the stabilizing agents for the ceramic material is more preferably from 8 to 15% by mass.

The ceramic material may contain unavoidable impurities as a remainder thereof. The unavoidable impurities are unavoidably contained from raw materials used in producing the ceramic material. Specific examples of the unavoidable impurities include an iron oxide and a hafnium oxide.

In the refractory for holding a molten glass of the present invention, the porosity of the ceramic material coating is from 5 to 20%. Since the porosity of the ceramic material coating falls within the above range, the effect of suppressing volatilization of platinum from the platinum coating or the platinum alloy coating is improved. This fact is described in the examples described hereinafter.

The reason that volatilization of platinum from the coating is suppressed in the case where the porosity of the ceramic material coating falls within the above range is not clear, but it is considered to be for the following reasons.

In the case where the porosity of the ceramic material coating falls within the above range, the surface of the platinum coating or the surface of the platinum alloy coating is slightly oxidized by oxygen (O₂) reached by migration and diffusion through pores present in the ceramic material coating, and volatilized as a platinum oxide (PtO₂) from the surface of the platinum coating or the surface of the platinum alloy coating. Gas partial pressure of PtO₂ in the ceramic material coating is increased by the platinum oxide volatilized. As a result, since oxidation of platinum on the surface of the platinum coating or the surface of the platinum alloy coating does not proceed, volatilization of platinum from the coating is suppressed.

Incidentally, the porosity of the ceramic material coating can be obtained by subjecting a cross-section photograph of the coating taken by a metallographic microscope to image processing, as described in the examples.

In the refractory for holding a molten glass of the present invention, the porosity of the ceramic material coating is more preferably from 8 to 20%, and still more preferably from 10 to 20%.

In the refractory for holding a molten glass of the present invention, a method for forming the ceramic material coating on the platinum coating or the platinum alloy coating is not particularly limited. However, formation by thermal spraying is preferred for the reasons that adhesiveness to the platinum coating or the platinum alloy coating is excellent, and that, in the case of forming the ceramic material coating mainly comprising a zirconium oxide, the porosity of the coating can fall within the above range, a thick coating can be formed and a coating can be formed on a large area. Atmospheric pressure plasma spraying method and water plasma spraying method are particularly preferably used as the thermal spraying method, but the thermal spraying method is not limited to those methods.

Moreover, in order that the porosity of a coating falls within the above range, it is preferred to use a raw material powder having a hollow structure or to conduct thermal spraying with a large spraying distance, but it is not limited to those methods.

Incidentally, the case that the porosity of the coating falls within the above range when the ceramic material coating has been formed by thermal spraying is a case of forming the coating of a ceramic material mainly comprising a zirconium oxide. In the case of forming the ceramic material coating mainly comprising an oxide other than a zirconium oxide, for example, the ceramic material coating mainly comprising an aluminum oxide, the porosity of the coating is low, and does not fall within the above range. This fact is confirmed by the examples described hereinafter.

In the refractory for holding a molten glass of the present invention, the thickness of the ceramic material coating is 0.1 mm or more. In the case where the thickness of the ceramic material coating is less than 0.1 mm, the effect of suppressing volatilization of platinum from the platinum coating or the platinum alloy coating cannot be exerted, and furthermore, wastage of the coating during using an apparatus for manufacturing a glass becomes a problem.

The thickness of the ceramic material coating is preferably 0.2 mm or more, and more preferably 0.3 mm or more. The upper limit of the thickness of the ceramic material coating is not particularly limited. In the case of forming the coating using a thermal spraying method, the thickness is preferably 1 mm or less, and more preferably 0.5 mm or less.

Next, the apparatus for manufacturing a glass and the method for manufacturing a glass of the present invention are descried below.

In the apparatus for manufacturing a glass of the present invention, the refractory for holding a molten glass of the present invention as described above is used in a refractory which is used in parts contacting a molten glass of the apparatus for manufacturing a glass.

In an apparatus for manufacturing a glass, specific examples of parts contacting a molten glass include a glass melting tank, a refining tank and a molten glass carrier pipe. In the apparatus for manufacturing a glass of the present invention, the refractory for holding a molten glass of the present invention is used as the refractory constituting those. The refractory for holding a molten glass of the present invention is that the surface coated with platinum or a platinum alloy and further coated with the ceramic material constitutes a surface contacting a molten glass during using the apparatus for manufacturing a glass.

In the apparatus for manufacturing a glass of the present invention, the temperature of the refractory for holding a molten glass of the present invention can be controlled by connecting the platinum coating or the platinum alloy coating to an electrode and conducting electrical heating.

The method for manufacturing a glass of the present invention is descried below.

The method for manufacturing a glass of the present invention is the same as the conventional method for manufacturing a glass, except for using the apparatus for manufacturing a glass of the present invention described above. The method for manufacturing a glass of the present invention can manufacture various glasses. Since the method for manufacturing a glass of the present invention can manufacture an excellent quality glass product in which defects by platinum volatilization have been suppressed, it is preferable to manufacture flat panel display substrate glasses such as a liquid crystal display substrate, and glass products such as an optical glass and an electronic glass.

### EXAMPLES

The present invention is described in detail below by reference to the examples, but the invention is not limited to those examples.

A refractory containing 94% by mass of a zirconium oxide, and the remainder thereof being a silicon oxide (5% by mass) and unavoidable impurities (for example, an iron oxide and a titanium oxide), and having a size of 75x75x15 mm was prepared.

A platinum coating (0.25 mm) was formed by thermal spraying on one main surface of the refractory.

Next, using a ceramic material containing 87% by mass of a zirconium oxide, 12% by mass of a yttrium oxide as a stabilizing agent, and the remainder thereof being unavoidable impurities (an iron oxide, a hafnium oxide and the like), a ceramic material coating (0.4 mm) was formed by a thermal spraying method on the platinum coating to obtain Sample D.

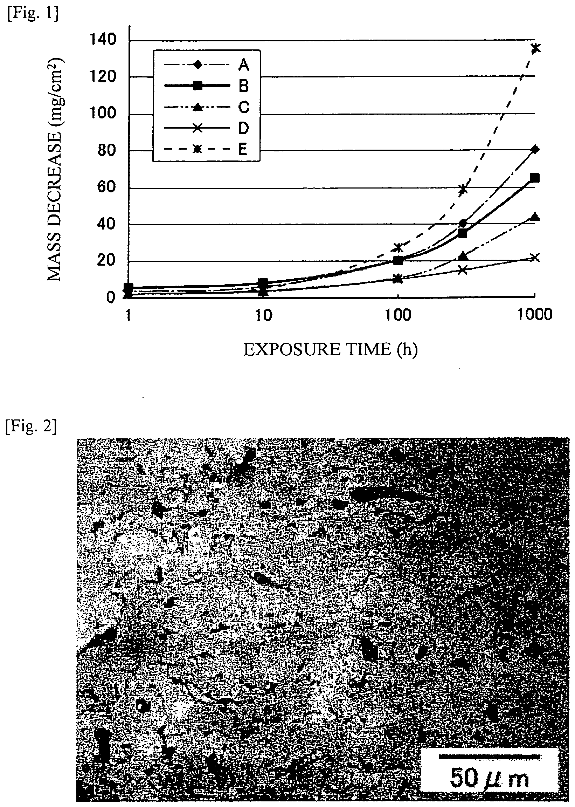

Sample D obtained was cut, a photograph of a polished cross-section was taken by a metallographic microscope, a cross-section photograph of the ceramic material coating was subjected to image processing, and a porosity of the ceramic material coating was obtained. As a result, the porosity was 12.6%. Incidentally, the cross-section photograph of the ceramic material coating of Sample D is shown in Fig. 2.

Sample D was exposed to the atmosphere at 1,600°C, and wastage over time was measured using a precision balance. The result that the measurement result was considered as decrease amount per unit area of a coating layer is shown in Fig. 1. Under these conditions, mass decrease of the refractory and the ceramic material coating does not occur. Therefore, the mass decrease is all due to volatilization of platinum from the platinum coating.

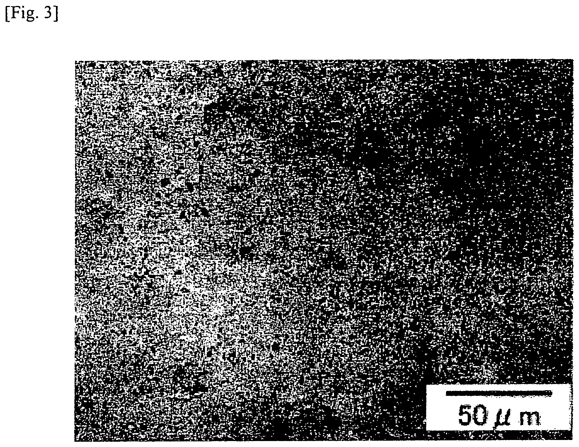

Sample C was prepared by carrying out the same procedures as in Sample D, except that the porosity of the ceramic material coating differs by changing the conditions in forming the ceramic material coating (thermal spraying conditions). The porosity of the ceramic material coating was 3.2%. Incidentally, cross-section photograph of the ceramic material coating of Sample C is shown in Fig. 3.

Moreover, Sample B was prepared by carrying out the same procedures as in Sample D, except that the thickness and porosity of the ceramic material coating differ by changing the conditions in forming the ceramic material coating (thermal spraying conditions). The ceramic material coating had a thickness of 0.2 mm and a porosity of 3.8%.

Sample A was prepared by carrying out the same procedures as in Sample D, except that a ceramic material coating (0.2 mm) was formed on the platinum coating by a thermal spraying method using a ceramic material containing 97% by mass of aluminum oxide and 3% by mass of titanium oxide as an additive for facilitating thermal spraying. The porosity of the ceramic material coating was 1.8%.

After forming a platinum coating on a refractory in the same procedures as in Sample D, a ceramic material coating was not formed on the platinum coating. This refractory was defined as Sample E.

Samples A to C and E were exposed to the atmosphere at 1,600°C, and mass decrease over time was measured. The result is shown in Fig. 1.

As is apparent from Fig. 1, it was confirmed that Sample D having the zirconium oxide coating having a porosity of 5% or more (12.6%) formed on the platinum coating was that mass decrease when exposed to the atmosphere at 1,600°C was suppressed low over a long period of time, and the effect of suppressing volatilization of platinum from the platinum coating was excellent. It was confirmed that Samples B and C having a porosity of the zirconium oxide coating of less than 5% were that mass decrease when exposed to the atmosphere at 1,600°C was low as compared with Sample E in which the ceramic material coating was not formed on the platinum coating, but as compared with Sample D, mass decrease was large, particularly mass decrease when exposed over 100 hours or more was large, and the effect of suppressing volatilization of platinum from the platinum coating was poor. It was confirmed that Sample A in which the aluminum oxide coating was formed in place of the zirconium oxide coating was that the porosity of the coating formed by thermal spraying was low, mass decrease when exposed to the atmosphere at 1,600°C was large, and the effect of suppressing volatilization of platinum from the platinum coating was poor.

## Claims

1. A refractory for holding a molten glass in which a surface thereof contacting a molten glass is coated with platinum or a platinum alloy containing from 5 to 20% of rhodium or iridium, and the platinum coating or the platinum alloy coating is further coated with a ceramic material,
wherein the refractory contains at least one of an aluminum oxide and a zirconium oxide in a total content of from 50 to 98% by mass, and a remainder thereof contains a silicon oxide,
the platinum coating or the platinum alloy coating has a thickness of from 0.05 to 0.5 mm,
the ceramic material contains from 80 to 95% by mass of a zirconium oxide, and a remainder thereof contains at least one selected from a yttrium oxide, an erbium oxide and a cerium oxide,
the ceramic material coating has a thickness of 0.1 mm or more, and
the ceramic material coating has a porosity of from 5 to 20%.

2. The refractory for holding a molten glass according to claim 1, wherein the refractory contains from 50 to 98% by mass of the zirconium oxide, and the remainder thereof contains the silicon oxide.

3. The refractory for holding a molten glass according to claim 1, wherein the refractory contains from 50 to 98% by mass of the aluminum oxide, and the remainder thereof contains the silicon oxide.

4. The refractory for holding a molten glass according to any one of claims 1 to 3, wherein the ceramic material coating has a thickness of from 0.1 mm to 1 mm.

5. The refractory for holding a molten glass according to any one of claims 1 to 4, wherein the refractory has a porosity of 30% or less.

6. An apparatus for manufacturing a glass, including the refractory for holding a molten glass according to any one of claims 1 to 5.

7. A method for manufacturing a glass, using the apparatus according to claim 6.

## Patentansprüche

1. Feuerfestes Material zum Enthalten eines geschmolzenen Glases, in welchem eine Oberfläche davon, die mit dem geschmolzenen Glas in Kontakt gebracht ist, mit Platin oder einer Platinlegierung, enthaltend von 5 bis 20% Rhodium oder Iridium, beschichtet ist, und wobei die Platinbeschichtung oder die Platinlegierungsbeschichtung weiter mit einem keramischen Material beschichtet ist, wobei das feuerfeste Material mindestens eines von einem Aluminiumoxid und einem Zirkoniumoxid in einem Gesamtgehalt von 50 bis 98 Massen-% enthält und ein Rest davon Siliziumoxid enthält,
die Platinbeschichtung oder die Platinlegierungsbeschichtung eine Dicke von 0,05 bis 0,5 mm aufweist,
das keramische Material von 80 bis 95 Massen-% eines Zirkoniumoxids enthält und ein Rest davon mindestens eines, ausgewählt aus einem Yttriumoxid, einem Erbiumoxid und einem Ceroxid, enthält,
die Beschichtung aus dem keramischen Material eine Dicke von 0,1 mm oder mehr aufweist und
die Beschichtung aus dem keramischen Material eine Porosität von 5 bis 20% aufweist.

2. Feuerfestes Material zum Enthalten eines geschmolzenen Glases nach Anspruch 1, wobei das feuerfeste Material von 50 bis 98 Massen-% des Zirkoniumoxids enthält und der Rest davon das Siliziumoxid enthält.

3. Feuerfestes Material zum Enthalten eines geschmolzenen Glases nach Anspruch 1, wobei das feuerfeste Material von 50 bis 98 Massen-% des Aluminiumoxids enthält und der Rest davon das Siliziumoxid enthält.

4. Feuerfestes Material zum Enthalten eines geschmolzenen Glases nach einem der Ansprüche 1 bis 3, wobei die Beschichtung aus dem keramischen Material eine Dicke von 0,1 mm bis 1 mm aufweist.

5. Feuerfestes Material zum Enthalten eines geschmolzenen Glases nach einem der Ansprüche 1 bis 4, wobei das feuerfeste Material eine Porosität von 30% oder weniger aufweist.

6. Vorrichtung zum Herstellen eines Glases, welche das feuerfeste Material zum Enthalten eines geschmolzenen Glases nach einem der Ansprüche 1 bis 5 einschließt.

7. Verfahren zur Herstellung eines Glases, welches die Vorrichtung nach Anspruch 6 verwendet.

## Revendications

1. Corps réfractaire pour renfermer un verre fondu dans lequel une surface de celui-ci venant en contact avec un verre fondu est revêtue de platine ou d'un alliage de platine contenant de 5 à 20 % de rhodium ou d'iridium, et le revêtement en platine ou le revêtement en alliage de platine est en outre revêtu d'un matériau céramique,
dans lequel le corps réfractaire contient au moins l'un d'un oxyde d'aluminium et d'un oxyde de zirconium dans une teneur totale de 50 à 98 % en masse, et un reste de celui-ci contient un oxyde de silicium,
le revêtement en platine ou le revêtement en alliage de platine a une épaisseur de 0,05 à 0,5 mm,
le matériau céramique contient de 80 à 95 % en masse d'un oxyde de zirconium, et un reste de celui-ci contient au moins un élément choisi parmi un oxyde d'yttrium, un oxyde d'erbium et un oxyde de cérium,
le revêtement en matériau céramique a une épaisseur de 0,1 mm ou plus, et
le revêtement en matériau céramique a une porosité de 5 à 20 %.

2. Corps réfractaire pour renfermer un verre fondu selon la revendication 1, dans lequel le corps réfractaire contient de 50 à 98 % en masse de l'oxyde de zirconium, et le reste de celui-ci contient l'oxyde de silicium.

3. Corps réfractaire pour renfermer un verre fondu selon la revendication 1, dans lequel le corps réfractaire contient de 50 à 98 % en masse de l'oxyde d'aluminium, et le reste de celui-ci contient l'oxyde de silicium.

4. Corps réfractaire pour renfermer un verre fondu selon l'une quelconque des revendications 1 à 3, dans lequel le revêtement en matériau céramique a une épaisseur de 0,1 mm à 1 mm.

5. Corps réfractaire pour renfermer un verre fondu selon l'une quelconque des revendications 1 à 4, dans lequel le corps réfractaire a une porosité de 30 % ou moins.

6. Appareil de fabrication d'un verre, incluant le corps réfractaire pour renfermer un verre fondu selon l'une quelconque des revendications 1 à 5.

7. Procédé de fabrication d'un verre, à l'aide de l'appareil selon la revendication 6.
